# EUROPEAN PATENT SPECIFICATION

(11) **EP 4 484 498 B1**
(45) Date of publication and mention of the grant of the patent: **22.07.2026**
(21) Application number: 24170541.7
(22) Date of filing: 16.04.2024
(51) Int. Cl.: C08L 83/04, F16D 65/00

(54) **SILICONE RUBBER COMPOSITION WITH EXCELLENT BRAKE FLUID RESISTANCE AND BRAKE CALIPER PISTON BOOT MANUFACTURED USING THE SAME**
SILIKONKAUTSCHUKZUSAMMENSETZUNG MIT HERVORRAGENDER BREMSFLÜSSIGKEITSBESTÄNDIGKEIT UND DAMIT HERGESTELLTER BREMSSATTELKOLBENSCHUH
COMPOSITION DE CAOUTCHOUC DE SILICONE PRÉSENTANT UNE EXCELLENTE RÉSISTANCE AUX FLUIDES DE FREINAGE ET SOUFFLET DE PISTON D'ÉTRIER DE FREIN FABRIQUÉ À L'AIDE DE CELLE-CI

(30) Priority: 28.06.2023 KR 20230083440
(43) Date of publication of application: 01.01.2025
(73) Proprietor: Hyundai Mobis Co., Ltd., Gangnam-gu Seoul 06141 (KR); Yound Shin TR Co., Ltd., Changnyeong-gun, Gyeongsangnam-do 50342 (KR); HRS CO., LTD., Pyeongtaek-si, Gyeonggi-do 17998 (KR)
(72) Inventor: SEO, Kang Won, 16891 Yongin-si, Gyeonggi-do (KR); JO, Chi Hoon, 16891 Yongin-si, Gyeonggi-do (KR); CHOI, Moo Jin, 16891 Yongin-si, Gyeonggi-do (KR); HONG, Hyun Hwa, 16891 Yongin-si, Gyeonggi-do (KR); SON, Sei Min, 16891 Yongin-si, Gyeonggi-do (KR); CHO, Sung Ho, 16891 Yongin-si, Gyeonggi-do (KR); KIM, Jin Yeop, 50342 Changnyeong-gun, Gyeongsangnam-do (KR); SEO, Han Jung, 50342 Changnyeong-gun, Gyeongsangnam-do (KR); MIN, Yong Ki, 17998 Pyeongtaek-si, Gyeonggi-do (KR); KIM, Dong Hwan, 17998 Pyeongtaek-si, Gyeonggi-do (KR); JANG, Jin Su, 17998 Pyeongtaek-si, Gyeonggi-do (KR); KIM, Jin Sung, 17998 Pyeongtaek-si, Gyeonggi-do (KR)
(74) Representative: Frenkel, Matthias Alexander

(56) References cited:
- CN-A- 108 342 085
- CN-A- 111 019 358
- CN-A- 112 646 376
- CN-A- 115 558 296
- CN-B- 112 646 294
- JP-A- 2008 169 955

## Description

### BACKGROUND

### 1. Field of the Invention

The present disclosure relates to a silicone rubber composition with excellent brake fluid resistance and a brake caliper piston boot manufactured by molding the same.

### 2. Discussion of Related Art

The brake caliper piston boot functions as a dust cover to prevent contact with the outside or the inflow of foreign substances when the caliper piston operates.

The caliper piston boot requires brake fluid resistance due to its role as the external seal of the brake caliper and its role in maintaining the hydraulic pressure of the internal brake fluid. In addition, depending on the caliper system, the sealing structure is different, and there is also a specification with a metal ring inserted, and for this reason, the rubber material must have excellent adhesion to the metal ring during molding and driving.

Silicone rubber (VMQ), which was previously used, was filled with silica and inorganic filler to increase the density, thereby suppressing the infiltration of hydrophobic oils (IRM902, IRM903, engine oil, and the like) into the rubber matrix and improving oil resistance.

This is effective when the silicone rubber is immersed in hydrophobic oil, but when it is immersed in a liquid containing ethylene glycol (C₄H₄(OH)₂) as the main ingredient, such as brake fluid, it was not effective in suppressing infiltration, and problems such as a decrease in the mechanical strength of the rubber or expansion in volume occurred. In addition, in severe cases, the mechanical strength of the silicone rubber may decrease, causing damage such as breaking of the molded test piece.

In addition, in order to suppress the infiltration of the silicone rubber (VMQ), a method of increasing the density of the resin matrix is generally used by post-adding (filling) an inorganic filler, but this does not effectively suppress the infiltration in the case of hydrophilic oil.

In the compounding process, which is a silicone rubber manufacturing process, a portion of the surface of silica used as a reinforcing filler can be modified to be hydrophobic by adding silicone oil, but when a lot of oil is added, the plasticity is lowered and the product is manufactured in a soft state to the point where post-processing cannot proceed, so there is a limit to increasing hydrophobicity.

On the other hand, fluorine-based silicone rubber (FVMQ) can effectively suppress the decrease in mechanical strength, volume expansion, and damage to parts by suppressing infiltration even when immersed in a liquid containing ethylene glycol (C₄H₄(OH)₂) as a main ingredient, such as brake fluid, due to its excellent oil resistance and chemical resistance, but because the price is 5 to 10 times higher than that of general silicone rubber (VMQ), there was a problem of deteriorating marketability when molding parts using fluorine-based silicone rubber (FVMQ).

In addition, EPDM material has excellent brake fluid resistance, but its heat resistance is inferior, so there is a problem that it is inferior to silicon at high temperatures.

As described above, in the case of piston boots using common silicone materials, the silicone rubber material is softened by ethylene glycol, which is the main component of brake fluid, which causes the molded material to break or its physical properties to deteriorate, and accordingly, there is a demand for the development of caliper piston boots made of silicone with improved brake fluid resistance. CN 111 019 358 A discloses a flame-retardant high-temperature-resistant irradiation-resistant silicone rubber, wherein the silicone rubber comprises the following components, by mass, 100 parts of raw methyl phenylvinyl silicone rubber, 10-60 parts of raw methyl vinyl silicone rubber, 1-10 parts of polyorganometallosiloxane, 2-10 parts of a structured control agent, 20-70 parts of fumed silica, 0.5-5 parts of high vinyl phenyl silicone oil, 0.1-5 parts of a nanometer heat-resistant agent, 1-5 parts of nanometer radiation-resistant particles, 5-60 parts of a heat-resistant modified additive, 1-5 parts of a heat-resistant modified nitrogen flame retardant, 0.005-1 part of a platinum complex and 0.5-3.0 parts of a vulcanizing agent. CN 108 342 085 A discloses macromolecules of organic chemistry, and particularly high-temperature-resistant silicone compound rubber and a preparation method thereof. CN 115 558 296 A discloses a high-temperature-resistant high-strength silicone rubber composition and a preparation method thereof, wherein the composition comprises the following components: 90-105 parts of methyl vinyl silicone rubber, 10-60 parts of fumed silica, 2-8 parts of a structured control agent, 1-10 parts of an auxiliary agent, 0.1-1 part of hydrogen-containing silicone oil, 0.05-1 part of an internal release agent and 0.5-2 parts of a vulcanizing agent. CN 112 646 294 B discloses fuororubber/silicone rubber blended rubber and a preparation method thereof. CN 112 646 376 A discloses a carbon fiber rubber composite pipe which comprises an inner pipe, an outer pipe arranged outside the inner pipe in a sleeving mode and a carbon fiber framework layer formed between the inner pipe and the outer pipe, and the inner pipe is made of silicon rubber and polyphenylene sulfide particles; and the outer pipe is made of silicon rubber.

### SUMMARY OF THE INVENTION

The present invention is directed to providing a silicone rubber composition with excellent brake fluid resistance and a brake caliper piston boot manufactured by molding the same.

One aspect of the present invention provides a silicone rubber composition according to the present claims including 30 to 50 parts by weight of a reinforcing filler, 5 to 10 parts by weight of silicone oil, and 1 to 5 parts by weight of a hydrophobic surface modifier, based on 100 parts by weight of silicone gum, wherein the hydrophobic surface modifier is a trialkoxysilane that is phenyltrialkoxysilane.

According to an embodiment, the reinforcing filler may be dry silica or wet silica, and a specific surface area of the dry silica preferably ranges from 100 m²/g to 300 m²/g.

According to an embodiment, the silicone rubber composition may further include one or more additives selected from an antioxidant, a rust inhibitor, a surfactant, a dispersant, a thickener, and an anti-foaming agent.

Another aspect of the present invention provides a caliper piston boot including a cured product of a silicone rubber composition including 30 to 50 parts by weight of a reinforcing filler, 5 to 10 parts by weight of silicone oil, and 1 to 5 parts by weight of a hydrophobic surface modifier, based on 100 parts by weight of silicone gum.

According to an embodiment, the caliper piston boot manufactured by molding the silicone rubber composition is characterized by a hardness, measured with Shore A durometer according to ASTM D 2240 or IRHD durometer according to ISO 48-2, before and after immersion in DOT3 brake fluid at 150 °C for 70 hours, as a brake fluid resistance test, differs by 8 or less.

According to an embodiment, the caliper piston boot manufactured by molding the silicone rubber composition is characterized in that the tensile strength, measured according to ASTM D 412, before and after immersion in DOT3 brake fluid at 150 °C for 70 hours, as a brake fluid resistance test, differs by 30% or less, and an elongation, measured according to ASTM D 412, before and after immersion in DOT3 brake fluid at 150 °C for 70 hours, as a brake fluid resistance test, differs by 30% or less.

According to an embodiment, the caliper piston boot manufactured by molding the silicone rubber composition is characterized by a volume, measured according to ASTM D471, before and after immersion in DOT3 brake fluid at 150 °C for 70 hours, as a brake fluid resistance test, differs by 5% or less.

### DETAILED DESCRIPTION OF EXEMPLARY EMBODIMENTS

Hereinafter, the present invention will be described in more detail with reference to embodiments and drawings.

Singular expressions include plural expressions unless the context clearly dictates otherwise. In the present application, it should be understood that the terms "include(s)" or "have(has)" and the like are intended to specify the presence of stated features, numbers, steps, operations, components, parts or combinations thereof, but do not preclude the presence or addition of one or more other features, numbers, steps, operations, components, parts and combinations thereof.

Unless defined otherwise, all terms used herein, including technical or scientific terms, have the same meaning as commonly understood by one of ordinary skill in the art to which this invention belongs. Terms such as those defined in commonly used dictionaries should be interpreted as having a meaning consistent with the meaning in the context of the related art and should not be interpreted in an ideal or excessively formal meaning unless explicitly defined in the present application.

The silicone rubber composition according to an embodiment includes silicone rubber as a crystalline base resin. Common silicone rubber (VMQ) is a compound made by mixing a linear silicone polymer, a reinforcing filler, and silicone oil. The silicone rubber has excellent heat resistance, cold resistance, and electrical properties and is molded and used for various purposes. In addition, various properties may be exhibited by applying small amounts of additives such as antioxidants, rust inhibitors, surfactants, dispersants, thickeners, and anti-foaming agents to existing compounds.

The silicone rubber composition of the present invention as claimed includes 30 to 50 parts by weight of a reinforcing filler, 5 to 10 parts by weight of silicone oil, and 1 to 5 parts by weight of a hydrophobic surface modifier, based on 100 parts by weight of silicone gum, wherein the hydrophobic surface modifier is a trialkoxysilane. A detailed description of each ingredient and material is as follows.

### <Silicone gum>

The linear silicone polymer applied to solid silicone rubber is called silicone gum (GUM) and is a compound having the structure shown in Chemical Formula 1 below.

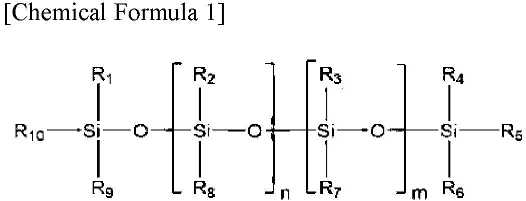

In the above formula, R₁ to R₁₀ are organic functional groups that are the same or different, and n and m are integers from 1 to 10,000 that are the same or different. Specifically, R₁ to R₁₀ are the same or different and each independently selected from the group consisting of hydrogen, a halogen, a substituted or unsubstituted C₁ to C₃₀ alkyl group, a substituted or unsubstituted C₂ to C₃₀ alkenyl group, a substituted or unsubstituted C₂ to C₂₄ alkynyl group, a substituted or unsubstituted C₂ to C₃₀ heteroalkyl group, a substituted or unsubstituted C₆ to C₃₀ aralkyl group, a substituted or unsubstituted C₅ to C₃₀ aryl group, a substituted or unsubstituted C₂ to C₃₀ heteroaryl group, a substituted or unsubstituted C₃ to C₃₀ heteroarylalkyl group, a substituted or unsubstituted C₃ to C₂₀ cycloalkyl group, a substituted or unsubstituted C₃ to C₂₀ heterocycloalkyl group, a substituted or unsubstituted C₃ to C₂₀ cycloalkenyl group, a substituted or unsubstituted C₃ to C₃₀ heteroaralkyl group, and a substituted or unsubstituted C₁ to C₂₀ heteroalkenyl group.

At least one of R₂, R₃, R₇ and R₈ is selected from a methyl group or a vinyl group.

### <Reinforcing filler>

The reinforcing filler is silica and is used by selecting either dry silica or wet silica. Among these, it is preferable to use dry silica with a specific surface area ranging from 100 m²/g to 300 m²/g.

The silicone rubber composition includes 30 to 50 parts by weight of a reinforcing filler based on 100 parts by weight of silicone gum. When the content of the reinforcing filler is less than 30 parts by weight, the mechanical strength of the composition is low and the composition becomes soft, causing a problem of poor elasticity and resilience, and when the content exceeds 50 parts by weight, the filler does not knead well and clumps up when kneading with silicone resin, creating a non-uniform composition, which causes poor mechanical properties, so it is suitable to use the filler in the above range.

### <Silicone oil>

The silicone oil applied in the embodiments is organopolysiloxane oil, which is a compound having the following structure, and as a silica surface treatment agent, it suppresses the silica filler from forming hydrogen bonds with moisture in the air, thereby correcting the plasticity, and improving mixing and dispersibility.

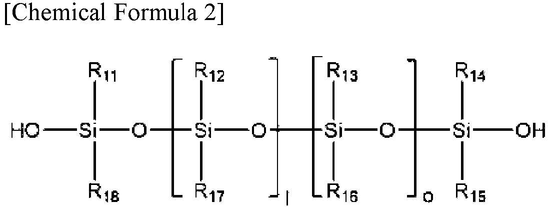

In the above Formula, R₁₁ to R₁₈ are the same or different organic functional groups, and 1 and o are the same or different integers from 1 to 1000. Specifically, R₁₁ to R₁₈ are the same or different and each independently selected from the group consisting of hydrogen, a halogen, a substituted or unsubstituted C₁ to C₃₀ alkyl group, a substituted or unsubstituted C₂ to C₃₀ alkenyl group, a substituted or unsubstituted C₂ to C₂₄ alkynyl group, a substituted or unsubstituted C₂ to C₃₀ heteroalkyl group, a substituted or unsubstituted C₆ to C₃₀ aralkyl group, a substituted or unsubstituted C₅ to C₃₀ aryl group, a substituted or unsubstituted C₂ to C₃₀ heteroaryl group, a substituted or unsubstituted C₃ to C₃₀ heteroarylalkyl group, a substituted or unsubstituted C₃ to C₂₀ cycloalkyl group, a substituted or unsubstituted C₃ to C₂₀ heterocycloalkyl group, a substituted or unsubstituted C₃ to C₂₀ cycloalkenyl group, a substituted or unsubstituted C₃ to C₃₀ heteroaralkyl group, and a substituted or unsubstituted C₁ to C₂₀ heteroalkenyl group.

At least one of R₁₂, R₁₃, R₁₆ and R₁₇ is selected from a methyl group or a vinyl group.

The silicone rubber composition includes 5 to 10 parts by weight of silicone oil based on 100 parts by weight of silicone gum. When the content of silicone oil is less than 5 parts by weight, the mixing and dispersibility of a silica filler through silica surface treatment decreases, resulting in an increased plasticity and a non-uniform composition, which causes poor mechanical properties, and when the content exceeds 10 parts by weight, unreacted oil remains in the composition, which lowers the plasticity and reduces mechanical strength, making the composition soft and reducing elasticity and resilience, so it is suitable to use it within the above range.

### <Hydrophobic surface modifier>

In the embodiment, a large number of hydrophobic functional groups were imparted to the surface of silica, which is used as a reinforcing filler in the preparation of silicone rubber, to effectively prevent the infiltration of ethylene glycol (C₂H₄(OH)₂), which is the main component of brake fluid, into the silicone rubber matrix.

Specifically, a trialkoxysilane represented by the following Chemical Formula 3 is used as a hydrophobic surface modifier for silica, in the limits of the present claims.

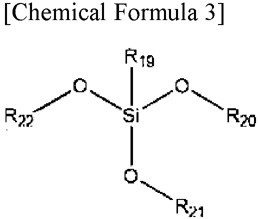

In the above formula, R₁₉ to R₂₂ are the same or different, and may each be independently selected from a methyl group, an ethyl group, and a phenyl group. For example, R₁₉ may be selected from a methyl group or a phenyl group, and at least one of R₂₀ to R₂₂ may be selected from a methyl group or an ethyl group.

Specific examples of alkyltrialkoxysilanes below include methyltrimethoxysilane, methyltriethoxysilane, phenyltrimethoxysilane, and phenyltriethoxysilane.

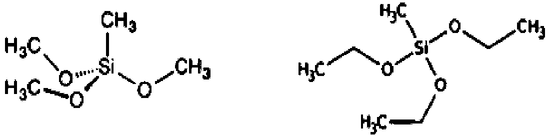

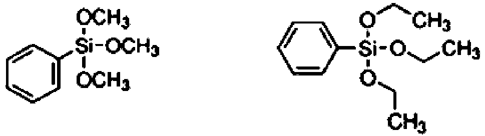

Among trialkoxysilanes, phenylalkoxysilane has excellent water repellency and may effectively block infiltration into the matrix by brake fluid, and even when the addition amount is increased to provide a large number of hydrophobic functional groups, it does not affect the plasticity, and a favorable plasticity may be maintained during post-processing and molding of parts, making it suitable for use as a surface modifier for silicone rubber compositions.

The silicone rubber composition includes 1 to 5 parts by weight of a hydrophobic modifier based on 100 parts by weight of silicone gum. When the content of the hydrophobic modifier is less than 1 part by weight, there is a problem of not providing sufficient hydrophobic functional groups to block infiltration into the matrix by brake fluid, and when the content exceeds 5 parts by weight, there is a problem of decreased mechanical properties due to excess unreacted modifier and an increased product price due to expensive raw materials, which reduces marketability, so it is suitable to use it within the above range.

The silicone rubber composition includes 30 to 50 parts by weight of a reinforcing filler, 5 to 10 parts by weight of silicone oil, and 1 to 5 parts by weight of a hydrophobic surface modifier, based on 100 parts by weight of silicone gum, wherein the hydrophobic surface modifier is a trialkoxysilane.

The hydrophobic surface modifier as defined in the claims is a trialkoxysilane that is phenyltrialkoxysilane.

The reinforcing filler may be dry silica or wet silica, and a specific surface area of the dry silica preferably ranges from 100 m²/g to 300 m²/g.

The silicone rubber composition may further include one or more additives selected from antioxidants, rust inhibitors, surfactants, dispersants, thickeners, and anti-foaming agents.

A caliper piston boot with excellent brake fluid resistance may be manufactured by molding a silicone rubber composition including 30 to 50 parts by weight of a reinforcing filler, 5 to 10 parts by weight of silicone oil, and 1 to 5 parts by weight of a hydrophobic surface modifier, based on 100 parts by weight of silicone gum, wherein the hydrophobic surface modifier may be a trialkoxysilane.

The caliper piston boot manufactured by molding the silicone rubber composition is characterized by a hardness change rate of 8 or less and a volume change rate of 3% or less as a result of a brake fluid resistance test measured after immersion in brake fluid at 150 °C for 70 hours.

In addition, the caliper piston boot manufactured by molding the silicone rubber composition is characterized in that the tensile strength change rate and elongation change rate are 20% or less as a result of a brake fluid resistance test measured after immersion in brake fluid at 150 °C for 70 hours.

The present invention will be described in more detail below through examples and test examples.

### <Example>

### Preparation of silicone rubber composition

A silicone rubber composition for manufacturing a brake caliper piston boot was prepared by mixing 30 to 50 parts by weight of silica as a reinforcing filler, 5 to 10 parts by weight of silicone oil, and 1 to 5 parts by weight of phenylalkoxysilane as a hydrophobic surface modifier based on 100 parts by weight of silicone gum.

### <Comparative Example 1>

A silicone rubber composition including only silicone gum, silicone oil, and silica filler was prepared without including a surface modifier.

### <Comparative Example 2>

An oil-resistant silicone rubber composition was prepared by adding inorganic fillers such as aluminum oxide (Al₂O₃) and quartz powder along with silica as a reinforcing filler to the resin composition according to Comparative Example 1.

### <Comparative Example 3>

A silicone rubber composition was prepared using fluorine-based silicone rubber.

### <Test Example>

### Evaluation of physical properties of molded articles

After sufficiently plasticizing each uncured silicone rubber composition prepared according to the above example in a two-roll mill, 1 part by weight of organic peroxide (2,5-dimethyl-2,5-t-butylhexane peroxide, 45% paste) was added based on 100 parts by weight of the uncured silicone rubber composition and sufficiently dispersed. Afterward, the preform that had gone through a defoaming process was pressed in a forming mold at 170 °C for 10 minutes to form a sheet with a thickness of 2 mm and cured in a hot air circulation oven at 200 °C for 4 hours to produce a cured rubber product. The following physical properties were evaluated for the produced cured product and are shown in Table 1.
- Hardness: Measured with Shore A durometer according to ASTM D 2240 or IRHD durometer according to ISO 48-2
- Tensile strength: Measured according to ASTM D 412 standard
- Elongation: Measured according to ASTM D 412 standard
- Mooney viscosity: Measured for 6 minutes at a temperature of 50 °C
- Curing time: Measured for 10 minutes at a temperature of 170 °C
- Brake oil immersion (DOT) test: A standard test piece (25x50x2.0±0.01mm) is prepared to measure the volume change rate according to the test method of ASTM D471 standard. After immersing in DOT3 oil at a temperature of 150 °C for 70 hours, the test piece is taken out and hardness change, tensile strength, elongation, and volume change rate are measured.

**[Table 1]**

| Evaluation items | | Comparative Example 1 | Comparative Example 2 | Comparative Example 3 | Example |
|---|---|---|---|---|---|
| Specific gravity | | 1.15 | 1.12 | 1.16 | 1.12 |
| Plasticity | | 220 | 200 | 225 | 200 |
| Hardness | (Shore A) | 60 | 59 | 58 | 59 |
| Tensile strength | (kgf/cm²) | 72 | 84 | 105 | 104 |
| Elongation | (%) | 295 | 380 | 480 | 560 |
| Mooney Viscosity | (Initial) | 37.9 | 31.8 | 35.7 | 29.2 |
| | (ML1:00) | 29.9 | 25 | 25.5 | 24.7 |
| Curing time | (Tc10) | 1:34 | 1:42 | 1:33 | 1:41 |
| | (Tc90) | 3:12 | 4:27 | 4:15 | 3:30 |
| DOT Oil | Hardness change | Cracks | -19 | -8 | -8 |
| | Tensile strength change rate (%) | Cracks | -80 | -34 | -20 |
| | Elongation change rate (%) | Cracks | -55 | 22 | 20 |
| | Volume change rate (%) | 3.9 | 3.1 | 3.1 | 3 |

**[Table 2]**

| | Comparative Example 1 | Comparative Example 2 | Example |
|---|---|---|---|
| Brake fluid resistance hardness change (IRHD) after aging brake fluid at 105 °C for 70 hr | -10 | -11 | -6 |

The silicone rubber composition including the hydrophobic modifier according to the example has a high level of excellent mechanical strength due to its excellent resistance to infiltration into the matrix of the silicone rubber even after being immersed in a hydrophilic solution such as ethylene glycol (C₂H₄(OH)₂), which is the main component of brake fluid.

In addition, by adding a silica hydrophobic modifier in the compounding process, it is possible to provide a large number of hydrophobic functional groups without increasing the amount of silicone oil commonly used, thereby preventing a decrease in plasticity due to silicone oil and preventing a decrease in work characteristics during a processing process.

In addition, it can be confirmed that the silicone rubber composition according to the example is economical because it can provide water repellency at a low production cost, and is suitable for manufacturing brake caliper piston boots because it has excellent brake fluid resistance and mechanical properties.

The brake caliper piston boot manufactured by molding the silicone rubber composition according to the present invention has excellent heat resistance and improved brake fluid resistance by applying a silicone material. In other words, the boot has excellent brake fluid (DOT) immersion resistance performance and can maintain mechanical performance even after immersion.

In addition, since excessive silicone oil is not added, it has the advantage of being able to correct plasticity to suit workability during processing and molding.

## Claims

1. A silicone rubber composition comprising: based on 100 parts by weight of silicone gum,
30 to 50 parts by weight of a reinforcing filler;
5 to 10 parts by weight of silicone oil; and
1 to 5 parts by weight of a hydrophobic surface modifier,
wherein the hydrophobic surface modifier is a trialkoxysilane, wherein the trialkoxysilane is phenyltrialkoxysilane.

2. The silicone rubber composition of claim 1, wherein the reinforcing filler is dry silica or wet silica.

3. The silicone rubber composition of claims 1 or 2, further comprising one or more additives selected from an antioxidant, a rust inhibitor, a surfactant, a dispersant, a thickener, and an anti-foaming agent.

4. A caliper piston boot comprising a cured product of a silicone rubber composition comprising: based on 100 parts by weight of silicone gum,
30 to 50 parts by weight of a reinforcing filler;
5 to 10 parts by weight of silicone oil; and
1 to 5 parts by weight of a hydrophobic surface modifier.

5. The caliper piston boot of claim 4, wherein a hardness, measured with Shore A durometer according to ASTM D 2240 or IRHD durometer according to ISO 48-2, before and after immersion in DOT3 brake fluid at 150 °C for 70 hours, as a brake fluid resistance test, differs by 8 or less .

6. The caliper piston boot of claim 4 or 5, wherein a tensile strength, measured according to ASTM D 412, before and after immersion in DOT3 brake fluid at 150 °C for 70 hours, as a brake fluid resistance test, differs by 30% or less, and an elongation, measured according to ASTM D 412, before and after immersion in DOT3 brake fluid at 150 °C for 70 hours, as a brake fluid resistance test, differs 30% or less.

7. The caliper piston boot of any one of claims 4 to 6, wherein a volume, measured according to ASTM D471, before and after immersion in DOT3 brake fluid at 150 °C for 70 hours, as a brake fluid resistance test, differs by 5% or less.

## Patentansprüche

1. Silikonkautschukzusammensetzung, umfassend: bezogen auf 100 Gewichtsteile Silikongummi,
30 bis 50 Gewichtsteile eines verstärkenden Füllstoffs;
5 bis 10 Gewichtsteile Silikonöl; und
1 bis 5 Gewichtsteile eines hydrophoben Oberflächenmodifikators,
wobei der hydrophobe Oberflächenmodifikator ein Trialkoxysilan ist, wobei das Trialkoxysilan Phenyltrialkoxysilan ist.

2. Silikonkautschukzusammensetzung nach Anspruch 1, wobei der verstärkende Füllstoff trockenes Siliciumdioxid oder nasses Siliciumdioxid ist.

3. Silikonkautschukzusammensetzung nach Anspruch 1 oder 2, ferner umfassend ein oder mehrere Additive, ausgewählt aus einem Antioxidationsmittel, einem Rostschutzmittel, einem Tensid, einem Dispergiermittel, einem Verdickungsmittel und einem Antischaummittel.

4. Eine Bremssattelkolbenmanschette, umfassend ein ausgehärtetes Produkt einer Silikonkautschukzusammensetzung, umfassend: bezogen auf 100 Gewichtsteile Silikongummi,
30 bis 50 Gewichtsteile eines verstärkenden Füllstoffs;
5 bis 10 Gewichtsteile Silikonöl; und
1 bis 5 Gewichtsteile eines hydrophoben Oberflächenmodifikators.

5. Bremssattelkolbenmanschette nach Anspruch 4, wobei eine Härte, gemessen mit einem Shore-A-Härteprüfer gemäß ASTM D 2240 oder einem IRHD-Härteprüfer gemäß ISO 48-2, vor und nach Eintauchen in DOT3-Bremsflüssigkeit bei 150 °C für 70 Stunden als Bremsflüssigkeitsbeständigkeitstest um 8 oder weniger abweicht.

6. Bremssattelkolbenmanschette nach Anspruch 4 oder 5, wobei die Zugfestigkeit, gemessen gemäß ASTM D 412, vor und nach Eintauchen in DOT3-Bremsflüssigkeit bei 150 °C für 70 Stunden als Bremsflüssigkeitsbeständigkeitstest um 30 % oder weniger abweicht, und die Dehnung, gemessen gemäß ASTM D 412, vor und nach Eintauchen in DOT3-Bremsflüssigkeit bei 150 °C für 70 Stunden als Bremsflüssigkeitsbeständigkeitstest um 30 % oder weniger abweicht.

7. Bremssattelkolbenmanschette nach einem der Ansprüche 4 bis 6, wobei ein Volumen, gemessen gemäß ASTM D471, vor und nach Eintauchen in DOT3-Bremsflüssigkeit bei 150 °C für 70 Stunden als Bremsflüssigkeitsbeständigkeitstest um 5 % oder weniger abweicht.

## Revendications

1. Composition de caoutchouc de silicone comprenant : par rapport à 100 parties en poids de gomme de silicone,
30 à 50 parties en poids d'une charge renforçante ;
5 à 10 parties en poids d'huile de silicone ; et
1 à 5 parties en poids d'un modificateur de surface hydrophobe,
dans lequel le modificateur de surface hydrophobe est un trialcoxysilane, dans lequel le trialcoxysilane est le phényltrialcoxysilane.

2. Composition de caoutchouc de silicone selon la revendication 1, dans laquelle la charge renforçante est de la silice sèche ou de la silice humide.

3. Composition de caoutchouc de silicone selon la revendication 1 ou 2, comprenant en outre un ou plusieurs additifs choisis parmi un antioxydant, un inhibiteur de rouille, un tensioactif, un dispersant, un épaississant et un agent anti-mousse.

4. Soufflet de piston d'étrier comprenant un produit durci d'une composition de caoutchouc de silicone comprenant : par rapport à 100 parties en poids de gomme de silicone,
30 à 50 parties en poids d'une charge renforçante ;
5 à 10 parties en poids d'huile de silicone ; et
1 à 5 parties en poids d'un modificateur de surface hydrophobe.

5. Soufflet de piston d'étrier selon la revendication 4, dans lequel une dureté, mesurée à l'aide d'un duromètre Shore A selon la norme ASTM D 2240 ou d'un duromètre IRHD selon la norme ISO 48-2, avant et après immersion dans du liquide de frein DOT3 à 150 °C pendant 70 heures, dans le cadre d'un essai de résistance au liquide de frein, diffère de 8 ou moins.

6. Soufflet de piston d'étrier selon la revendication 4 ou 5, dans lequel une résistance à la traction, mesurée selon la norme ASTM D 412, avant et après immersion dans du liquide de frein DOT3 à 150 °C pendant 70 heures, dans le cadre d'un essai de résistance au liquide de frein, diffère de 30 % ou moins, et un allongement, mesuré selon la norme ASTM D 412, avant et après immersion dans du liquide de frein DOT3 à 150 °C pendant 70 heures, dans le cadre d'un essai de résistance au liquide de frein, diffère de 30 % ou moins.

7. Soufflet de piston d'étrier selon l'une quelconque des revendications 4 à 6, dans lequel un volume, mesuré selon la norme ASTM D471, avant et après immersion dans du liquide de frein DOT3 à 150 °C pendant 70 heures, dans le cadre d'un essai de résistance au liquide de frein, diffère de 5 % ou moins.
